# EUROPÄISCHE PATENTANMELDUNG

(11) **EP 2 077 197 A2**
(43) Veröffentlichungstag der Anmeldung: **08.07.2009**
(21) Anmeldenummer: 08018534.1
(22) Anmeldetag: 23.10.2008
(51) Int. Cl.: B60C 23/06

(54) **Verfahren zum Identifizieren von Minderdruck aufweisenden Reifen von Fahrzeugrädern**

(30) Priorität: 04.01.2008 DE 102008003192
(71) Anmelder: WABCO GmbH, 30432 Hannover (DE)
(72) Erfinder: Bork, Andre, 30455 Hannover (DE); Munko, Tobias, 30171 Hannover (DE); Schmidt, Detlef, 30989 Gehrden (DE)

(57) **Zusammenfassung**

Die Erfindung betrifft ein Verfahren zum Identifizieren von Minderdruck aufweisenden Reifen von Fahrzeugrädern, bei dem die Anzahl Radumdrehungen für jedes Rad über eine vorgebbare Fahrdistanz ermittelt wird, die ermittelte Anzahl Radumdrehungen kreuzweise verglichen wird, indem die Summe der ermittelten Anzahl Radumdrehungen der diagonal angeordneten Räder vorn rechts und hinten links sowie der Räder vorn links und hinten rechts gebildet wird und die Diagonaldifferenz der beiden Summenwerte gebildet wird, wobei über das Vorzeichen der Diagonaldifferenz die wenigstens ein mit Minderdruck betroffenes Rad aufweisende Diagonale identifizierbar ist. Die ermittelte Anzahl Radumdrehungen wird ferner seitenweise verglichen, indem die Summe der Anzahl Radumdrehungen der seitlichen Räder vorn links und hinten links sowie der Räder vorn rechts und hinten rechts gebildet wird und die Seitendifferenz der beiden Summenwerte gebildet wird, wobei über das Vorzeichen der Seitendifferenz die wenigstens ein mit Minderdruck behaftetes Rad aufweisende Seite identifizierbar ist. Die Diagonaldifferenz wird mit einem Minderdruckerkennungsschwellwert verglichen und bei Überschreitung des Minderdruckerkennungsschwellwertes werden die Vorzeichen der Diagonaldifferenz und der Seitendifferenz miteinander verknüpft zum Identifizieren des mit Minderdruck behafteten Reifens der Fahrzeugräder.

## Beschreibung

Die Erfindung betrifft ein Verfahren zum Identifizieren von Minderdruck aufweisenden Reifen von Fahrzeugrädern.

In Kraftfahrzeugen werden zur Verbesserung der Sicherheit vermehrt Reifendrucküberwachungssysteme eingesetzt, wobei in der Regel direkt messende Systeme verwendet werden, die Drucksensoren an den Rädern einsetzen. Nachteilig ist, dass bei diesen Systemen zusätzliche Drucksensoren verbaut werden müssen.

Durch die DE 101 52 590 A1 ist ein Verfahren und ein System zur Reifendrucküberwachung für mit Antiblockierschutz-Systemen ausgerüstete Fahrzeuge, insbesondere Fahrzeuge mit mehr als zwei Achsen, bekannt. Das Reifendrucküberwachungssystem weist Radsensoren an den Rädern wenigstens einer Achse zur Erfassung von von der Radrotation abhängigen Größen und eine ABS-Steuereinheit auf, die die ermittelten Größen miteinander verknüpft und hinsichtlich Änderungen der Abrollradien der Räder unter Berücksichtigung fahrbetriebsbedingter Änderungen der Größen auswertet. Die ABS-Steuereinheit erzeugt ein Warnsignal, wenn die durch Reifendruckabfall bewirkte Änderung der Größen einen vorgegebenen Grenzwert überschreitet. Zusätzlich oder alternativ zu radrotationsabhängigen Größen, wie Radrotationsgeschwindigkeit oder zurückgelegte Rad-Wegstrecke, erfassenden Radsensoren des ABS-Systems ist ein Reifendruckmesssystem vorgesehen, das den absoluten Reifenfülldruck der Räder wenigstens einer Achse misst und ein Warnsignal erzeugt, wenn der gemessene Reifenfülldruck einen vorgegebenen Solldruck unterschreitet. Bei diesem bekannten System ist vorgesehen, die Radrotationsgeschwindigkeiten oder Wegstrecken der einzelnen Räder oder die Summen der Radrotationsgeschwindigkeiten oder Wegstrecken diagonal angeordneter Räder in der ABS-Steuereinheit miteinander zu vergleichen, die ein Warnsignal erzeugt, wenn die Differenz der miteinander verglichenen Wegstrecken oder Radrotationsgeschwindigkeiten oder die Differenz der miteinander verglichenen Summen der Radrotationsgeschwindigkeiten oder Wegstrecken einen vorgegebenen Schwellwert überschreitet.

Die Aufgabe der vorliegenden Erfindung besteht darin, ein Verfahren der eingangs genannten Art so auszubilden, dass die Identifizierung von Minderdruck aufweisenden Reifen von Fahrzeugrädern verbessert und auf die Verwendung von Drucksensoren an den Rädern verzichtet werden kann.

Diese Aufgabe wird durch die Erfindung gemäß Anspruch 1 gelöst. Vorteilhafte und zweckmäßige Weiterbildungen der Aufgabenlösung sind in den Unteransprüchen angegeben.

Die Erfindung schlägt ein nur auf der Anzahl Radumdrehungen basierendes Verfahren zur indirekten Reifendrucküberwachung vor, durch das ohne zusätzliche Drucksensoren das mit Minderdruck behaftete Rad eines Kraftfahrzeuges sicher identifizierbar ist. Die Anzahl Radumdrehungen wird bestimmt durch die Zählung ganzzahliger und anteiliger Rotation der Räder oder durch Zählung geeigneter, direkt damit verknüpfter Größen, wie Triggersignale von ABS Radsensoren.

Das erfindungsgemäße Verfahren, das ein Verfahren zur indirekten Reifenminderdruckerkennung darstellt, besteht darin, dass die Anzahl Radumdrehungen für jedes Rad, vorzugsweise fortlaufend, über jeweils eine vorgebbare Fahrdistanz ermittelt wird und die ermittelte Anzahl Radumdrehungen der Räder kreuzweise verglichen wird, indem die Summe der ermittelten Anzahl Radumdrehungen der diagonal angeordneten Räder vorn rechts und hinten links sowie der Räder vorn links und hinten rechts gebildet wird und die Diagonaldifferenz der beiden Summenwerte gebildet wird. Bei Reifenminderdruck steigt die Anzahl Radumdrehungen des betroffenen Rades durch die Umfangsabnahme an. Die Diagonaldifferenz wird mit einem Minderdruckerkennungsschwellwert verglichen. Wenn dieser Schwellwert, vorzugsweise mehrfach aufeinander folgend, überschritten wird, wird Minderdruck erkannt und gemeldet.

Über das Vorzeichen der Diagonaldifferenz kann zudem die betroffene Fahrzeugdiagonale identifiziert werden. Bei einer Bildung der Diagonaldifferenz Summe(vorne/rechts + hinten/links) - Summe(vorne/links + hinten/rechts) ist bei einem positiven Vorzeichen der Diagonaldifferenz die Diagonalräder vorne/rechts - hinten/links und bei einem negativen Vorzeichen die Diagonalräder vorne/links - hinten/links betroffen.

Der mit Minderdruck betroffene Reifen könnte jetzt schneller manuell ermittelt werden, da nur noch zwei Diagonalreifen zu überprüfen wären.

Um eine solche manuelle Ermittlung des minderdruckbehafteten Rades zu vermeiden, sieht das erfindungsgemäße Verfahren vor, bei Überschreitung des Minderdruckerkennungsschwellwertes die ermittelte Anzahl Radumdrehungen zusätzlich seitenweise zu vergleichen, indem die Summe der Anzahl Radumdrehungen der seitlichen Räder vorn/links und hinten/links sowie die Summe der Anzahl Radumdrehungen der seitlichen Räder vorn/rechts und hinten/rechts gebildet wird und die Seitendifferenz der beiden Summenwerte gebildet wird. Wenn bspw. die Differenz Summe (vorn/links + hinten/links) - Summe (vorne/rechts + hinten/rechts) gebildet wird, ergibt ein positives Vorzeichen des Differenzwertes, dass die Räder der linken Fahrzeugseite betroffen sind, und ergibt ein negatives Vorzeichen, dass die Räder der rechten Fahrzeugseite betroffen sind.

Auch hier würde die Radidentifikation durch Auswertung der Seitendifferenz zu einer schnelleren manuellen Ermittlung führen, da nur die Räder einer Seite zu prüfen wären, was zu einem Sicherheitsgewinn führt, z.B. bei einer Reifenpanne am Straßenrand.

Die Seitendifferenz ist frei von Antriebseinflüssen.

Da die Bildung und Summierung vorzugsweise über eine lange Distanz erfolgt, ist davon auszugehen, dass Einflüsse durch Kurvenfahrt, wobei davon ausgegangen wird, dass ein gleicher Anteil von Links- und Rechtskurven vorliegt, sich weitestgehend aufheben und das Ergebnis signifikant auf die mit Reifenminderdruck betroffene Seite hinweist.

Durch Verknüpfung der beiden Informationen über die betroffene Fahrzeugdiagonale und die betroffene Fahrzeugseite, d.h. durch verknüpfte Auswertung von Seitendifferenz und Diagonaldifferenz bzw. durch Verknüpfung der Vorzeichen der Diagonaldifferenz und der Seitendifferenz miteinander lässt sich das betroffene Rad eindeutig identifizieren.

Bei Fahrzeugen mit mehr als zwei Achsen können entsprechend mehr Diagonaldifferenzen (zwischen Achse 1+2, Achse 2+3, etc.) gebildet werden, wobei die Vorzeicheninformationen dieser Differenzen so verknüpft werden können, dass eine noch höhere Sicherheit bei der Radidentifikation erreicht wird.

Anstelle des seitenweisen Vergleichs der Anzahl Radumdrehungen können die Anzahl Radumdrehungen auch achsweise verglichen werden, indem die Summe der Anzahl Radumdrehungen der Räder vorn/links und vorn/rechts sowie die Summe der Anzahl Radumdrehungen der Räder hinten/links und hinten/rechts gebildet werden und die achsweise Differenz der beiden Summenwerte gebildet wird. Durch Verknüpfung der Vorzeichen der achsweisen Differenz mit den Vorzeichen der Diagonaldifferenz ist auch hier eine eindeutige Identifizierung des mit Minderdruck behafteten Reifens erreichbar. Auch ist analog wie oben schon für die Diagonaldifferenz und die seitenweise Differenz beschrieben über das Vorzeichen der achsweisen Differenz die vorn Minderdruck betroffene Achse identifizierbar.

Die Achsdifferenz ist frei von Kurveneinflüssen und vorzugsweise für nicht angetriebene Fahrzeugachsen geeignet.

In einem beigefügten Schemabild ist die Vorzeichenverknüpfung von Seiten-/Diagonaldifferenzen bei einem Fahrzeug mit drei Achsen dargestellt. Wenn bei Betrachtung eines Fahrzeugs mit zwei Achsen die Diagonaldifferenz von (vorne rechts + hinten links) minus (vorne links + hinten rechts) ein positives Vorzeichen und die Seitendifferenz (vorne links + hinten links) minus (vorne rechts + hinten rechts) ein positives Vorzeichen aufweisen, ist der mit Minderdruck behaftete Reifen der Reifen des Rades hinten links.

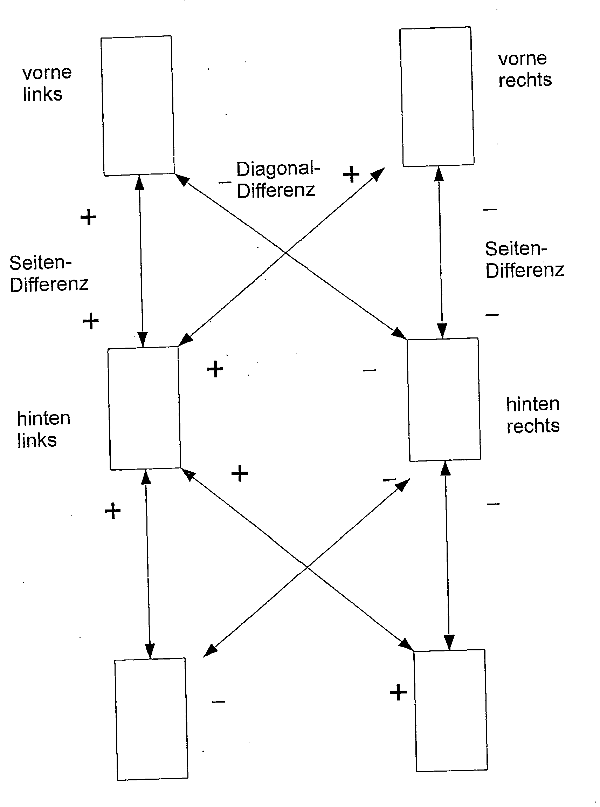

## Patentansprüche

1. Verfahren zum Identifizieren von Minderdruck aufweisenden Reifen von Fahrzeugrädern, wobei
- die Anzahl Radumdrehungen für jedes Rad über eine vorgebbare Fahrdistanz ermittelt wird,
- die ermittelte Anzahl Radumdrehungen der Räder kreuzweise verglichen wird, indem die Summe der ermittelten Anzahl Radumdrehungen der diagonal angeordneten Räder vorn rechts und hinten links sowie der Räder vorn links und hinten rechts gebildet wird und die Diagonaldifferenz der beiden Summenwerte gebildet wird, wobei über das Vorzeichen der Diagonaldifferenz die wenigstens ein mit Minderdruck betroffenes Rad aufweisende Diagonale identifizierbar ist,
**dadurch gekennzeichnet, dass** zusätzlich die ermittelte Anzahl Radumdrehungen der Räder seitenweise verglichen werden, indem die Summe der Anzahl Radumdrehungen der seitlichen Räder vorn links und hinten links sowie der Räder vorn rechts und hinten rechts gebildet wird und die Seitendifferenz der beiden Summenwerte gebildet wird, wobei über das Vorzeichen der Seitendifferenz die wenigstens ein mit Minderdruck behaftetes Rad aufweisende Seite identifizierbar ist.

2. Verfahren nach Anspruch 1, **dadurch gekennzeichnet, dass** die Anzahl Radumdrehungen jeweils fortlaufend über die vorgebbare Fahrdistanz ermittelt werden.

3. Verfahren nach Anspruch 1 oder 2, **dadurch gekennzeichnet, dass** die Diagonaldifferenz mit einem Minderdruckerkennungsschwellwert verglichen wird und bei Überschreitung des Minderdruckerkennungsschwellwertes die Vorzeichen der Diagonaldifferenz und der Seitendifferenz miteinander verknüpft werden zum Identifizieren des mit Minderdruck behafteten Reifens der Fahrzeugräder.

4. Verfahren nach Anspruch 1 bis 3, **dadurch gekennzeichnet, dass** anstelle des seitenweisen Vergleichs der Anzahl Radumdrehungen die Anzahl Radumdrehungen achsweise verglichen werden, indem die Summe der Anzahl Radumdrehungen der Räder vorn links und vorn rechts sowie die Summe der Anzahl Radumdrehungen der Räder hinten links und hinten rechts gebildet wird und die achsweise Differenz der beiden Summenwerte gebildet wird, wobei über das Vorzeichen der achsweisen Differenz die wenigstens ein mit Minderdruck betroffenes Rad aufweisende Achse identifizierbar ist.

5. Verfahren nach Anspruch 4, **dadurch gekennzeichnet, dass** die Vorzeichen der achsweisen Differenz mit den Vorzeichen der Diagonaldifferenz und/oder mit den Vorzeichen der Seitendifferenz verknüpft werden zum Identifizieren des mit Minderdruck behafteten Reifens der Fahrzeugräder.
